# EUROPEAN PATENT APPLICATION

(11) **EP 2 637 324 A1**
(43) Date of publication of application: **11.09.2013**
(21) Application number: 11847889.0
(22) Date of filing: 23.08.2011
(51) Int. Cl.: H04B 10/12

(54) **METHOD FOR OBTAINING CONNECTION RELATIONSHIP OF OPTICAL FIBRE, NODE DEVICE AND OPTICAL NETWORK SYSTEM**

(71) Applicant: Huawei Technologies Co., Ltd., Shenzhen, Guangdong 518129 (CN)
(72) Inventor: HAN, Jianrui, Shenzhen Guangdong 518129 (CN); GAO, Jianhua, Shenzhen Guangdong 518129 (CN)
(74) Representative: Epping - Hermann - Fischer
(86) International application number: PCT/CN2011/078802
(87) International publication number: WO 2012/119411

(57) **Abstract**

The present invention provides a method for acquiring an optical fiber connection relation, a node device, and an optical network system. The method is applied in a node device. In the node device, a first unit is connected to a first storage unit; the first storage unit is connected to a first end of an optical fiber; a second unit is connected to a second storage unit; the second storage unit is connected to a second end of the optical fiber; and a management control unit is connected respectively to the first unit and the second unit. The method includes: acquiring, by the first unit, first port identification information of the optical fiber, where the first port identification information of the optical fiber is pre-stored in the first storage unit; correlating port identification information of the first unit that is connected to the first storage unit with the first port identification information; acquiring, by the second unit, second port identification information of the optical fiber, where the second port identification information of the optical fiber is pre-stored in the second storage unit; correlating port identification information of the second unit that is connected to the second storage unit with the second port identification information; acquiring, by the management control unit, correlation information; and determining an optical fiber connection relation between the first unit and the second unit.

## Description

### FIELD OF THE INVENTION

The present invention relates to the field of optical communications technologies, and in particular, to a method and an apparatus for detecting an optical fiber connection relation.

### BACKGROUND OF THE INVENTION

With the rapid development of communication networks, optical networks have become a core of wide area networks and metropolitan area networks in the future. Among them, a wavelength division multiplexing (Wavelength Division Multiplexing, WDM) optical network receives extensive attention. Generally, a node device in the WDM optical network has some units therein connected by a great number of optical fibers. A method employed in the prior art is that, a low-frequency signal is modulated on an optical wavelength, and the node device may acquire an optical fiber connection relation in the node device according to the detected low-frequency signal.

However, before the low-frequency signal is modulated, it needs to ensure that a laser located at a source end provides a light source, and it needs to complete the establishment of a path from the source end to a sink end. In addition, a detection unit must be configured in the node device, so as to complete a detection of the low-frequency signal. Apparently, the solution according to the prior art is cumbersome and complex.

### SUMMARY OF THE INVENTION

Many aspects of the present invention provide a method for acquiring an optical fiber connection relation, a node device and an optical network system, so as to timely acquire an optical fiber connection relation between units in a node device.

In one aspect, an embodiment of the present invention provides a method for acquiring an optical fiber connection relation. The method is applied in a node device, where the node device at least includes a first unit, a second unit, a first storage unit, a second storage unit, and a management control unit. The first unit is connected to the first storage unit; the first storage unit is connected to a first end of an optical fiber; the second unit is connected to the second storage unit; the second storage unit is connected to a second end of the optical fiber; and the management control unit is connected respectively to the first unit and the second unit. The method includes: acquiring, by the first unit, first port identification information of the optical fiber, where the first port identification information of the optical fiber is pre-stored in the first storage unit; correlating port identification information of the first unit that is connected to the first storage unit with the first port identification information, to obtain first correlation information; acquiring, by the second unit, second port identification information of the optical fiber, where the second port identification information of the optical fiber is pre-stored in the second storage unit; correlating port identification information of the second unit that is connected to the second storage unit with the second port identification information, to obtain second correlation information; acquiring, by the management control unit, the first correlation information and the second correlation information; and determining an optical fiber connection relation between the first unit and the second unit.

In another aspect, an embodiment of the present invention provides a method for acquiring an optical fiber connection relation. The method is applied in an optical network system in which a node device communicates with a management control unit, where the node device at least includes a first unit, a second unit, a first storage unit, and a second storage unit. The first unit is connected to the first storage unit; the first storage unit is connected to a first end of an optical fiber; the second unit is connected to the second storage unit; and the second storage unit is connected to a second end of the optical fiber. The method includes: acquiring, by the first unit, first port identification information of the optical fiber, where the first port identification information of the optical fiber is pre-stored in the first storage unit; correlating port identification information of the first unit that is connected to the first storage unit with the first port identification information, to obtain first correlation information; acquiring, by the second unit, second port identification information of the optical fiber, where the second port identification information of the optical fiber is pre-stored in the second storage unit; correlating port identification information of the second unit that is connected to the second storage unit with the second port identification information, to obtain second correlation information; acquiring, by the management control unit, the first correlation information and the second correlation information that are obtained by the node device; and determining an optical fiber connection relation between the first unit and the second unit in the node device.

In another aspect, an embodiment of the present invention provides a node device. The node device at least includes: a first unit, a second unit, a first storage unit, a second storage unit, and a management control unit. The first unit is connected to the first storage unit; the first storage unit is connected to a first end of an optical fiber; the second unit is connected to the second storage unit; the second storage unit is connected to a second end of the optical fiber; and the management control unit is connected respectively to the first unit and the second unit. The first storage unit is configured to pre-store first port identification information of the optical fiber; the first unit is configured to acquire the first port identification information, and correlate port identification information of the first unit that is connected to the first storage unit with the first port identification information, to obtain first correlation information; the second storage unit is configured to store second port identification information of the optical fiber; the second unit is configured to acquire the second port identification information, and correlate port identification information of the second unit that is connected to the second storage unit with the second port identification information, to obtain second correlation information; and the management control unit is configured to acquire the first correlation information and the second correlation information, and determine an optical fiber connection relation between the first unit and the second unit.

In another aspect, an embodiment of the present invention provides an optical network system. The system at least includes a node device and a management control unit. The node device at least includes: a first unit, a second unit, a first storage unit and a second storage unit. The first unit is connected to the first storage unit; the first storage unit is connected to a first end of an optical fiber; the second unit is connected to the second storage unit; and the second storage unit is connected to a second end of the optical fiber. The first storage unit is configured to pre-store first port identification information of the optical fiber; the first unit is configured to acquire the first port identification information, and correlate port identification information of the first unit that is connected to the first storage unit with the first port identification information, to obtain first correlation information; the second storage unit is configured to store second port identification information of the optical fiber; the second unit is configured to acquire the second port identification information, and correlate port identification information of the second unit that is connected to the second storage unit with the second port identification information, to obtain second correlation information; and the management control unit is configured to acquire the first correlation information and the second correlation information that are obtained by the node device, and determine an optical fiber connection relation between the first unit and the second unit in the node device.

Compared with the techical solution in the prior art, the technical solutions according to the embodiments of the present invention is simpler and easier to be operated, through which the optical fiber connection relation between units in the node device can be acquired timely.

### BRIEF DESCRIPTION OF THE DRAWINGS

To illustrate the technical solutions in the embodiments of the present invention or in the prior art more clearly, the accompanying drawings for describing the embodiments or the prior art are introduced briefly in the following. Apparently, the accompanying drawings in the following descriptions are only some embodiments of the present invention, and persons of ordinary skill in the art may further derive other drawings according to the accompanying drawings without creative efforts.
FIG. 1 is a schematic structural diagram of a node device in an optical network according to an embodiment of the present invention;
FIG. 2 is a schematic flowchart of a method for acquiring an optical fiber connection relation applied in a node device shown in FIG. 1;
FIG. 3 is a schematic structural diagram of an optical network system in which a node device communicates with a management control unit according to another embodiment of the present invention;
FIG. 4 is a schematic flowchart of a method for acquiring an optical fiber connection relation applied in an optical network system shown in FIG. 3;
FIG. 5 is a schematic structural diagram of a node device according to another embodiment of the present invention; and
FIG. 6 is a schematic structural diagram of a node device according to another embodiment of the present invention.

### DETAILED DESCRIPTION OF THE EMBODIMENTS

In the following descriptions, for the purpose of illustration instead of limitation, specific details of a particular apparatus structure and technology are given, so as to facilitate a full understanding of the present invention. However, it is clear to persons skilled in the art that, the present invention may also be implemented in other embodiments without these specific details. In other cases, detailed descriptions for well-known apparatuses, circuits and methods are omitted, so as to prevent the unnecessary details from affecting the description of the present invention.

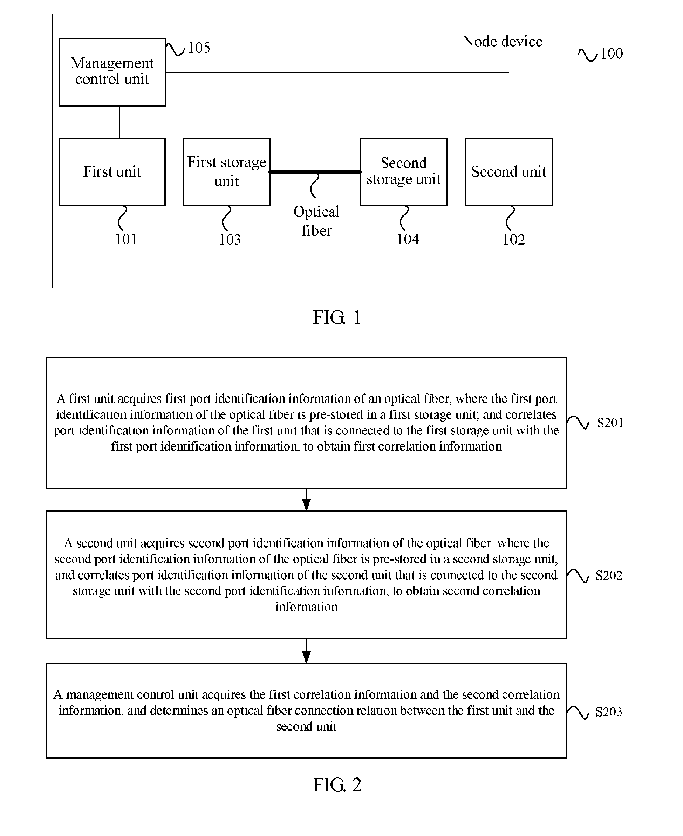

Referring to FIG. 1, FIG. 1 is a schematic structural diagram of a node device in an optical network according to an embodiment of the present invention. It can be known from FIG. 1 that, a node device 100 at least includes: a first unit 101, a second unit 102, a management control unit 105, and two storage units. The first unit 101 is connected to a first storage unit 103; the first storage unit 103 is connected to a first end of an optical fiber; the second unit 102 is connected to the second storage unit 104; the second storage unit 104 is connected to a second end of the optical fiber; and the management control unit 105 is connected respectively to the first unit 101 and the second unit 102. A technical solution according to an embodiment of the present invention is described below based on FIG. 1 and in combination with FIG. 2. FIG. 2 is a schematic flowchart of a method for acquiring an optical fiber connection relation applied in a node device shown in FIG. 1. The technical solution according to the embodiment of the present invention specifically includes:
In S201, a first unit acquires first port identification information of an optical fiber, where the first port identification information of the optical fiber is pre-stored in a first storage unit; and correlates port identification information of the first unit that is connected to the first storage unit with the first port identification information, to obtain first correlation information.

In S202, a second unit acquires second port identification information of the optical fiber, where the second port identification information of the optical fiber is pre-stored in a second storage unit; and correlates port identification information of the second unit that is connected to the second storage unit with the second port identification information, to obtain second correlation information.

In S203, a management control unit acquires the first correlation information and the second correlation information, and determines an optical fiber connection relation between the first unit and the second unit.

Here, it should be noted that, the first unit and the second unit that are included in the node device are embodied as units that need to be interconnected through the optical fiber and storage units in the node device in the optical network. For example, the first unit may be a 40-channel multiplexing board with VOA (40-channel multiplexing board with VOA, referred to as M40V hereinafter), and the second unit may be an optical transponder unit (Optical Transponder Unit, referred to as OTU hereinafter); or the first unit may be a 9-port wavelength selective switching demultiplexing board (9-port wavelength selective switching demultiplexing board, referred to as WSD9 hereinafter), and the second unit may be a 9-port wavelength selective switching multiplexing board (9-port wavelength selective switching multiplexing board, referred to as WSM9 hereinafter); or the first unit may be an OTU, and the second unit may be a 40-channel demultiplexing board (40-channel demultiplexing board, referred to as D40 hereinafter). The foregoing descriptions are only specific example, and not intended to limit the embodiment of the present invention in any way. Generally, the first unit and the second unit may actively acquire information from corresponding storage units.

It should be further noted that, the two ends of the optical fiber are respectively connected to one storage unit, and the storage unit included in the node device is configured to store the port identification information of the one end of the optical fiber, where the one end of the optical fiber is connected to the storage unit. For example, the storage unit may be a device unit for reading/writing data, or an electrically-erasable programmable read-only memory (Electrically-Erasable Programmable Read-Only Memory, referred to as EEPROM hereinafter). The foregoing descriptions are only specific example, and not intended to limit the embodiment of the present invention in any way.

Optionally, the first port identification information of the optical fiber and the second port identification information of the optical fiber may be the same or different. In a case that the two pieces of information are different, the first unit and the second unit both need to pre-save the first port identification information and the second port identification information, where the first port identification information and the second port identification information are used to identify correlation information of a same optical fiber, that is, third correlation information. Accordingly, the management control unit further acquires the third correlation information, and then determines an optical fiber connection relation between the first unit and the second unit based on the first correlation information and the second correlation information, in combination with the third correlation information. Generally, the management control unit may actively acquire information from the first unit and the second unit, or passively acquire information in a manner that the first unit and the second unit send the information to the management control unit.

In addition, the first port identification information and the second port identification information of the optical fiber may be represented by digital identification "00" or by letter identification "AA", and these are only specific examples, and not intended to limit the embodiment of the present invention in any way. The first port identification information and the second port identification information may be embodied as identification information that is unique and does not repeat with other identification information in the node device, or embodied as identification information that is unique and does not repeat with other identification information in the optical network.

In the technical solution in the prior art, a low-frequency signal can only be modulated on the premise that a laser provides a light source. In addition, before the low-frequency signal is modulated, it needs to complete the establishment of a path from a source end to a sink end, with a purpose of transfering the low-frequency signal from upstream to downstream, so that each node device on the path in the optical network can acquire the optical fiber connection relation through the low-frequency signal in the node device. Apparently, complex disadvantages of the technical solution in the prior art are overcome in the technical solution according to the embodiment of the present invention, because a laser is not required to provide a light source, a path from the source end to the sink end is not required to be established, and a configuration detection unit is not required to be added in the node device, and only the two ends of the optical fiber are required to be respectively connected to one storage unit in which the port identification information of the optical fiber is pre-stored, so that the node device can acquire the correlation information of the port identification information of the units in the node device with the port identification information of the optical fiber in the node device, thereby acquiring the optical fiber connection relation between units in the node device. Therefore, compared with the technical solution in the prior art, the technical solution according to the embodiment of the present invention is simpler and easier to be operated.

Preferably, an optical fiber connection relation between units in the node device may be preset, and then the setting is stored in the management control unit. In this case, after S203, the management control unit judges whether the optical fiber connection relation between the first unit and the second unit is correct by querying the preset optical fiber connection relation between units in the node device. Apparently, compared with the technical solution in the prior art, the technical solution according to the embodiment of the present invention enables that the optical fiber connection relation between the units in the node device can be acquired timely, and whether the optical fiber connection relation between the units in the node device is correct can be quickly and effectively judged.

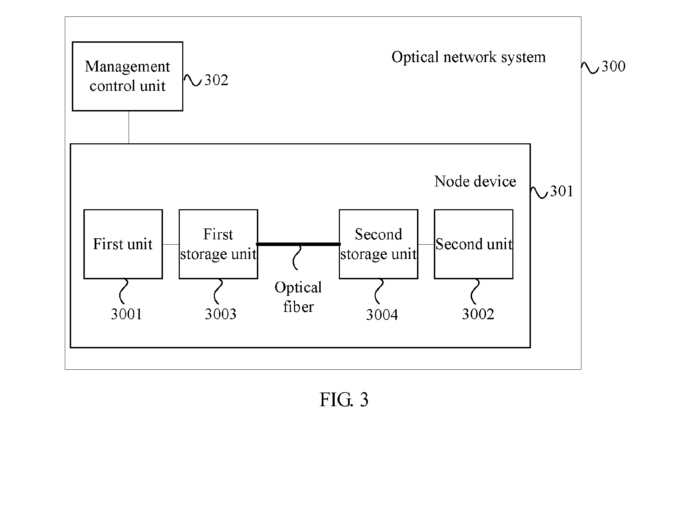

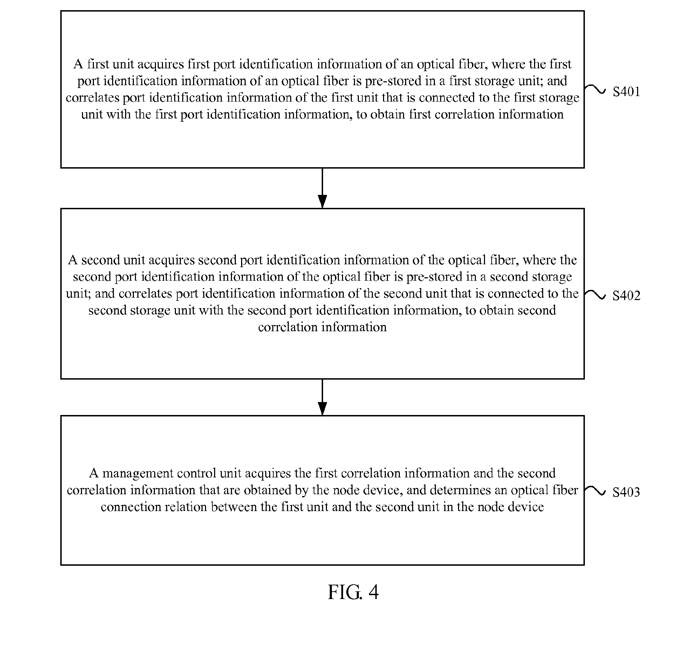

In the foregoing embodiment, the management control unit is located in the node device; however, in the following embodiment, the management control unit is located in an optical network system, and communicates with the node device. Referring to FIG. 3, FIG. 3 is a schematic structural diagram of an optical network system in which a node device communicates with a management control unit according to another embodiment of the present invention. It can be known from FIG. 3 that, an optical network system 300 at least includes a node device 301 and a management control unit 302. The node device 301 at least includes: a first unit 3001, a second unit 3002, and two storage units. The first unit 3001 is connected to a first storage unit 3003; the first storage unit 3003 is connected to a first end of an optical fiber; the second unit 3002 is connected to a second storage unit 3004; and the second storage unit 3004 is connected to a second end of the optical fiber. A technical solution according to an embodiment of the present invention is described below based on FIG. 3 and in combination with FIG. 4. FIG. 4 is a schematic flowchart of a method for acquiring an optical fiber connection relation applied in the optical network system shown in FIG. 3. The technical solution according to the embodiment of the present invention specifically includes:
In S401, a first unit acquires first port identification information of an optical fiber, where the first port identification information of the optical fiber is pre-stored in a first storage unit; and correlates port identification information of the first unit that is connected to the first storage unit with the first port identification information, to obtain first correlation information.

In S402, a second unit acquires second port identification information of the optical fiber, where the second port identification information of the optical fiber is pre-stored in a second storage unit; and correlates port identification information of the second unit that is connected to the second storage unit with the second port identification information, to obtain second correlation information.

In S403, a management control unit acquires the first correlation information and the second correlation information that are obtained by the node device, and determines an optical fiber connection relation between the first unit and the second unit in the node device.

Here, it should be noted that, the first unit and the second unit that are included in the node device are embodied as units that need to be interconnected through the optical fiber and storage units in the node device in the optical network. Generally, the first unit and the second unit may actively acquire information from corresponding storage units.

It should be further noted that, the two ends of the optical fiber are respectively connected to one storage unit, and the storage unit included in the node device is configured to store the port identification information of the one end of the optical fiber, where the one end of the optical fiber is connected to the storage unit.

Optionally, the first port identification information of the optical fiber and the second port identification information of the optical fiber may be the same or different. In a case that the two pieces of information are different, the first unit and the second unit both need to pre-save the first port identification information and the second port identification information, where the first port identification information and the second port identification information are used to identify correlation information of a same optical fiber, that is, third correlation information. Accordingly, the management control unit further acquires the third correlation information that is pre-stored in the node device, and then determines the optical fiber connection relation between the first unit and the second unit in the node device based on the first correlation information and the second correlation information, and in combination with the third correlation information. Generally, the management control unit may actively acquire information from the first unit and the second unit in the node device, or passively acquire information in a manner that the first unit and the second unit in the node device send the information to the management control unit.

In addition, as for the first port identification information and the second port identification information of the optical fiber, reference may be made to the descriptions in the foregoing embodiment, and details are not further described herein again.

Preferably, an optical fiber connection relation between units in the node device may be preset, and then the setting is stored in the management control unit. In this case, after S403, the management control unit judges whether the optical fiber connection relation between the first unit and the second unit in the node device is correct by querying the preset optical fiber connection relation between units in the node device.

To sum up, compared with the technical solution in the prior art, the technical solution according to the embodiment of the present invention is simpler and easier to be operated, through which the optical fiber connection relation between the units in the node device can be acquired timely, and whether the optical fiber connection relation between the units in the node device is correct can be quickly and effectively judged.

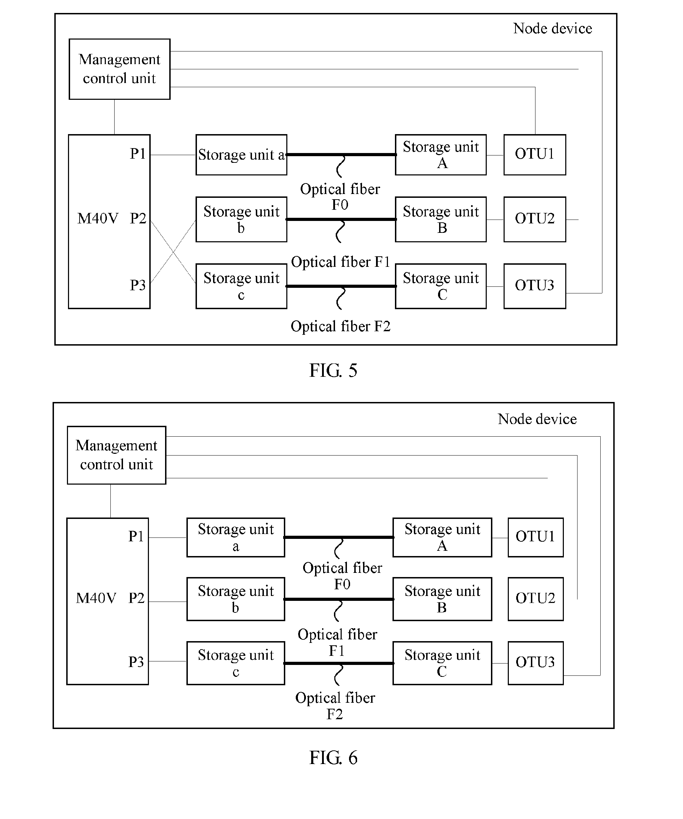

The technical solution according to the embodiment of the present invention is described in detail below with reference to a specific example. Referring to FIG.5, FIG. 5 is a schematic structural diagram of a node device according to another embodiment of the present invention. The node device includes a M40V, three OUTs (represented by OTU1, OTU2 and OTU3 in FIG. 5), six storage units (represented by storage units a, b, and c, and A, B, and C in FIG. 5) and a management control unit. A first port (P1) of the M40V is connected to the storage unit a; the storage unit a is connected to a first end of an optical fiber that is identified as "F0"; the OTU1 is connected to the storage unit A; and the storage unit A is connected to a second end of the optical fiber F0. A second port (P2) of the M40V is connected to the storage unit c; the storage unit c is connected to a first end of an optical fiber that is identified as "F2"; the OTU3 is connected to the storage unit C; and the storage unit C is connected to a second end of the optical fiber F2. A third port (P3) of the M40V is connected to the storage unit b; the storage unit b is connected to a first end of an optical fiber that is identified as "F1"; the OTU2 is connected to the storage unit B; and the storage unit B is connected to a second end of the optical fiber F1. The management control unit is connected respectively to the M40V, the OTU1, the OTU2 and the OTU3. Port identification information of the optical fiber F0 pre-stored in the storage unit a and the storage unit A is 00; port identification information of the optical fiber F1 pre-stored in the storage unit b and the storage unit B is 01; and port identification information of the optical fiber F2 pre-stored in the storage unit c and the storage unit C is 02.

The technical solution according to the embodiment of the present invention includes:
In S601, the M40V acquires the port identification information 00 of the optical fiber, where the port identification information 00 of the optical fiber is pre-stored in the storage unit a; correlates port identification information M40V-P1 of the M40V that is connected to the storage unit a with the port identification information 00 of the optical fiber, to obtain first correlation information; acquires the port identification information 01 of the optical fiber, where the the port identification information 01 of the optical fiber is pre-stored in the storage unit b; correlates port identification information M40V-P3 of the M40V that is connected to the storage unit b with the port identification information 01 of the optical fiber, to obtain second correlation information; acquires port identification information 02 of the optical fiber, where the port identification information 02 of the optical fiber is pre-stored in the storage unit c; and correlates port identification information M40V-P2 of the M40V that is connected to the storage unit c with the port identification information 02 of the optical fiber, to obtain third correlation information.

In S602, the OTU1 acquires the port identification information 00 of the optical fiber, where the port identification information 00 of the optical fiber is pre-stored in the storage unit A; and correlates port identification information OTU1-P of the OTU1 that is connected to the storage unit A with the port identification information 00 of the optical fiber, to obtain fourth correlation information.

In S603, the OTU2 acquires the port identification information 01 of the optical fiber, where the port identification information 01 of the optical fiber is pre-stored in the storage unit B; and correlates port identification information OTU2-P of the OTU2 that is connected to the storage unit B with the port identification information 01 of the optical fiber, to obtain fifth correlation information.

In S604, the OTU3 acquires the port identification information 02 of the optical fiber, where the port identification information 02 of the optical fiber is pre-stored in the storage unit C; and correlates port identification information OTU3-P of the OTU3 that is connected to the storage unit C with the port identification information 02 of the optical fiber, to obtain sixth correlation information.

In S605, the management control unit acquires the first correlation information, the second correlation information, the third correlation information, the fourth correlation information, the fifth correlation information, and the sixth correlation information; and determines an optical fiber connection relation between the M40V and the OTU1, an optical fiber connection relation between the M40V and the OTU2, and an optical fiber connection relation between the M40V and the OTU3.

Optionally, optical fiber connection relations between units in the node device are preset, and include: the optical fiber connection relation between the first port of the M40V and the OTU1, the optical fiber connection relation between the second port of the M40V and the OTU2, and the optical fiber connection relation between the third port of the M40V and the OTU3. The setting is pre-stored in the management control unit. Specifically, referring to FIG.6, FIG. 6 is a schematic structural diagram of a node device according to another embodiment of the present invention. Based on the pre-settings and in combination with the M40V, the OTU, the storage unit, the management control unit, and the optical fiber, FIG. 6 shows a connection relation between units in the node device, including that: The first port (P1) of the M40V is connected to the storage unit a; the storage unit a is connected to the first end of the optical fiber F0; the OTU1 is connected to the storage unit A; the storage unit A is connected to the second end of the optical fiber F0; the second port (P2) of the M40V is connected to the storage unvit b; the storage unit b is connected to the first end of the optical fiber F1; the OTU2 is connected to the storage unit B; the storage unit B is connected to the second end of the optical fiber F1; the third port (P3) of the M40V is connected to the storage unit c; the storage unit c is connected to the first end of the optical fiber F2; the OTU3 is connected to the storage unit C; the storage unit C is connected to the second end of the optical fiber F2; and the management control unit is connected respectively to the M40V, the OTU1, the OTU2, and the OTU3.

After S605, the management control unit judges that the optical fiber connection relation between the M40V and the OTU1 is correct, the optical fiber connection relation between the M40V and the OTU2 is incorrect, and the optical fiber connection relation between the M40V and the OTU3 is incorrect, by querying the preset optical fiber connection relations between units in the node device.

To sum up, compared with the technical solution in the prior art, the technical solution according to the embodiment of the present invention is simpler and easier to be operated, through which the optical fiber connection relation between the units in the node device can be acquired timely, and whether the optical fiber connection relation between the units in the node device is correct can be quickly and effectively judged.

Referring back to FIG. 1, another embodiment of the present invention provides a node device. The node device 100 at least includes: a first unit 101, a second unit 102, a first storage unit 103, a second storage unit 104, and a management control unit 105. The first unit 101 is connected to the first storage unit 103; the first storage unit 103 is connected to a first end of an optical fiber; the second unit 102 is connected to the second storage unit 104; the second storage unit 104 is connected to a second end of the optical fiber; and the management control unit 105 is connected respectively to the first unit 101 and the second unit 102.

The first storage unit 103 is configured to pre-store first port identification information of the optical fiber.

The first unit 101 is configured to acquire the first port identification information, and correlate port identification information of the first unit 101 that is connected to the first storage unit 103 with the first port identification information, to obtain first correlation information.

The second storage unit 104 is configured to store second port identification information of the optical fiber.

The second unit 102 is configured to acquire the second port identification information, and correlate port identification information of the second unit 102 that is connected to the second storage unit 104 with the second port identification information, to obtain second correlation information.

The management control unit 105 is configured to acquire the first correlation information and the second correlation information, and determine an optical fiber connection relation between the first unit 101 and the second unit 102.

Optionally, the management control unit 105 is further configured to store a preset optical fiber connection relation between units in the node device, and judge whether the obtained optical fiber connection relation between the first unit 101 and the second unit 102 is correct.

Optionally, the first unit 101 and the second unit 102 are further configured to, in a case that the first port identification information and the second port identification information are different, pre-store the first port identification information and the second port identification information, where the first port identification information and the second port identification information are used to identify correlation information of the same optical fiber, thereby obtaining third correlation information. Accordingly, the management control unit 105 is further configured to acquire the third correlation information, and then determine the optical fiber connection relation between first unit 101 and the second unit 102 based on the first correlation information and the second correlation information, and in combination with the third correlation information.

Referring back to FIG. 3, another embodiment of the present invention provides an optical network system. A system 300 at least includes a node device 301 and a management control unit 302. The node device 301 at least includes: a first unit 3001, a second unit 3002, a first storage unit 3003, and a second storage unit 3004. The first unit 3001 is connected to the first storage unit 3003; the first storage unit 3003 is connected to a first end of an optical fiber; the second unit 3002 is connected to the second storage unit 3004; and the second storage unit 3004 is connected to a second end of the optical fiber.

The first storage unit 3003 is configured to pre-store first port identification information of the optical fiber.

The first unit 3001 is configured to acquire the first port identification information, and correlate port identification information of the first unit 101 that is connected to the first storage unit 3003 with the first port identification information, to obtain first correlation information.

The second storage unit 3004 is configured to store second port identification information of the optical fiber.

The second unit 3002 is configured to acquire the second port identification information, and correlate port identification information of the second unit 102 that is connected to the second storage unit 3004 with the second port identification information, to obtain second correlation information.

The management control unit 302 is configured to acquire the first correlation information and the second correlation information that are obtained by the node device 301, and determine an optical fiber connection relation between the first unit 3001 and the second unit 3002 in the node device 301.

Optionally, the management control unit 302 is further configured to store a preset optical fiber connection relation between units in the node device, and judge whether the obtained optical fiber connection relation between the first unit 3001 and the second unit 3002 in the node device 301 is correct.

Optionally, the first unit 3001 and the second unit 3002 are further configured to, in a case that the first port identification information and the second port identification information are different, pre-store the first port identification information and the second port identification information, where the first port identification information and the second port identification information are used to identify correlation information of the same optical fiber, thereby obtaining third correlation information. Accordingly, the management control unit 302 is further configured to acquire the third correlation information that is pre-stored in the node device 301, and then determine the optical fiber connection relation between first unit 3001 and the second unit 3002 in the node device 301 based on the first correlation information and the second correlation information, and in combination with the third correlation information.

It can be clearly understood by persons skilled in the art that, for convenience and conciseness of the description, as for a specific working process of the foregoing system, device and units, reference may be made to the corresponding process in the foregoing method embodiments, and the details are not described herein again.

To sum up, compared with the technical solution in the prior art, the technical solution according to the embodiment of the present invention is simpler and easier to be operated, through which the optical fiber connection relation between the units in the node device can be acquired timely, and whether the optical fiber connection relation between the units in the node device is correct can be quickly and effectively judged.

Communication connection involved in the foregoing embodiments may be communication connection through some interfaces, apparatuses, or units, or be electrical connection, mechanical connection or other forms of connection. It should be further noted that "first", "second", "third" and similar expressions in the foregoing embodiments are intended to make the technical solutions according to the embodiments clearer, instead of limiting the present invention.

Persons skilled in the art may realize that, the steps of the method and units described in combination with the embodiments disclosed herein may be implemented by electronic hardware, computer software, or a combination thereon. To clearly illustrate the interchangeability of hardware and software, steps and components in the embodiments have been generally described in terms of their functions in the foregoing descriptions. Whether these functions are executed by hardware or software depends upon the particular application and design constraint conditions of the technical solution. Persons skilled in the art may implement the described functions in varying ways for each particular application, but such implementations should not be interpreted as departure from the scope of the present invention.

The embodiments in the foregoing descriptions are merely provided for describing the technical solutions of the present invention, but not intended to limit the present invention. It should be understood by persons of ordinary skill in the art that, although the present invention has been described in detail with reference to the embodiments, modifications can be made to the technical solutions described in the embodiments, or equivalent replacements can be made to some technical features in the technical solutions, as long as such modifications or replacements do not cause the essence of the corresponding technical solutions to depart from the principle and scope of the technical solutions according to the embodiments of the present invention.

## Claims

1. A method for acquiring an optical fiber connection relation, wherein the method is applied in a node device, and the node device at least comprises a first unit, a second unit, a first storage unit, a second storage unit, and a management control unit; the first unit is connected to the first storage unit; the first storage unit is connected to a first end of an optical fiber; the second unit is connected to the second storage unit; the second storage unit is connected to a second end of the optical fiber; and the management control unit is connected respectively to the first unit and the second unit; and the method comprises:
acquiring, by the first unit, first port identification information of the optical fiber, wherein the first port identification information of the optical fiber is pre-stored in the first storage unit; correlating port identification information of the first unit that is connected to the first storage unit with the first port identification information, to obtain first correlation information;
acquiring, by the second unit, second port identification information of the optical fiber, wherein the second port identification information of the optical fiber is pre-stored in the second storage unit; correlating port identification information of the second unit that is connected to the second storage unit with the second port identification information, to obtain second correlation information; and
acquiring, by the management control unit, the first correlation information and the second correlation information; and determining an optical fiber connection relation between the first unit and the second unit.

2. The method according to claim 1, wherein after the determining the optical fiber connection relation between the first unit and the second unit, the method further comprises:
judging, by the management control unit, whether the optical fiber connection relation between the first unit and the second unit is correct by querying a preset optical fiber connection relation between units in the node device.

3. The method according to claim 1 or 2, wherein the first port identification information and the second port identification information are the same, or the first port identification information and the second port identification information are different.

4. The method according to claim 3, wherein the method further comprises:
pre-saving, by the first unit and the second unit, the first port identification information and the second port identification information in a case that the first port identification information and the second port identification information are different, wherein the first port identification information and the second port identification information are used to identify correlation information of a same optical fiber, thereby obtaining third correlation information; and
acquiring, by the management control unit, the third correlation information, wherein
the determining the optical fiber connection relation between the first unit and the second unit specifically comprises: determining, by the management control unit, the optical fiber connection relation between the first unit and the second unit based on the first correlation information and the second correlation information, and in combination with the third correlation information.

5. A method for acquiring an optical fiber connection relation, wherein the method is applied in an optical network system in which a node device communicates with a management control unit, and the node device at least comprises a first unit, a second unit, a first storage unit, and a second storage unit; the first unit is connected to the first storage unit; the first storage unit is connected to a first end of an optical fiber; the second unit is connected to the second storage unit; and the second storage unit is connected to a second end of the optical fiber; and the method comprises:
acquiring, by the first unit, first port identification information of the optical fiber, wherein the first port identification information of the optical fiber is pre-stored in the first storage unit; correlating port identification information of the first unit that is connected to the first storage unit with the first port identification information, to obtain first correlation information;
acquiring, by the second unit, second port identification information of the optical fiber, wherein the second port identification information of the optical fiber is pre-stored in the second storage unit; correlating port identification information of the second unit that is connected to the second storage unit with the second port identification information, to obtain second correlation information; and
acquiring, by the management control unit, the first correlation information and the second correlation information that are obtained by the node device; and determining an optical fiber connection relation between the first unit and the second unit in the node device.

6. The method according to claim 5, wherein after the determining the optical fiber connection relation between the first unit and the second unit in the node device, the method further comprises:
judging, by the management control unit, whether the optical fiber connection relation between the first unit and the second unit in the node device is correct by querying a preset optical fiber connection relation between units in the node device.

7. The method according to claim 5 or 6, wherein the first port identification information and the second port identification information are the same, or the first port identification information and the second port identification information are different.

8. The method according to claim 7, wherein the method further comprises:
pre-saving, by the first unit and the second unit, the first port identification information and the second port identification information in a case that the first port identification information and the second port identification information are different, wherein the first port identification information and the second port identification information are used to identify correlation information of the same optical fiber, thereby obtaining third correlation information; and
acquiring, by the management control unit, the third correlation information, wherein
the determining the optical fiber connection relation between the first unit and the second unit in the node device specifically comprises: determining, by the management control unit, the optical fiber connection relation between the first unit and the second unit based on the first correlation information and the second correlation information, and in combination with the third correlation information.

9. A node device, wherein the node device at least comprises: a first unit, a second unit, a first storage unit, a second storage unit, and a management control unit, wherein the first unit is connected to the first storage unit; the first storage unit is connected to a first end of an optical fiber; the second unit is connected to the second storage unit; the second storage unit is connected to a second end of the optical fiber; and the management control unit is connected respectively to the first unit and the second unit;
the first storage unit is configured to pre-store first port identification information of the optical fiber;
the first unit is configured to acquire the first port identification information, and correlate port identification information of the first unit that is connected to the first storage unit with the first port identification information, to obtain first correlation information;
the second storage unit is configured to store second port identification information of the optical fiber;
the second unit is configured to acquire the second port identification information, and correlate port identification information of the second unit that is connected to the second storage unit with the second port identification information, to obtain second correlation information; and
the management control unit is configured to acquire the first correlation information and the second correlation information, and determine an optical fiber connection relation between the first unit and the second unit.

10. The node device according to claim 9, wherein the management control unit is further configured to store a preset optical fiber connection relation between units in the node device, and judge whether the obtained optical fiber connection relation between the first unit and the second unit is correct.

11. The node device according to claim 9 or 10, wherein the first port identification information and the second port identification information are the same, or the first port identification information and the second port identification information are different;
the first unit and the second unit are further configured to pre-save, in a case that the first port identification information and the second port identification information are different, the first port identification information and the second port identification information, wherein the first port identification information and the second port identification information are used to identify correlation information of the same optical fiber, thereby obtaining third correlation information; and
the management control unit is further configured to acquire the third correlation information, and determine the optical fiber connection relation between the first unit and the second unit based on the first correlation information and the second correlation information, and in combination with the third correlation information.

12. An optical network system, wherein the system at least comprises a node device and a management control unit, and the node device at least comprises: a first unit, a second unit, a first storage unit, and a second storage unit; the first unit is connected to the first storage unit; the first storage unit is connected to a first end of an optical fiber; the second unit is connected to the second storage unit; and the second storage unit is connected to a second end of the optical fiber;
the first storage unit is configured to pre-store first port identification information of the optical fiber;
the first unit is configured to acquire the first port identification information, and correlate port identification information of the first unit that is connected to the first storage unit with the first port identification information, to obtain first correlation information;
the second storage unit is configured to store second port identification information of the optical fiber;
the second unit is configured to acquire the second port identification information, and correlate port identification information of the second unit that is connected to the second storage unit with the second port identification information, to obtain second correlation information; and
the management control unit is configured to acquire the first correlation information and the second correlation information that are obtained by the node device, and determine an optical fiber connection relation between the first unit and the second unit in the node device.

13. The node device according to claim 12, wherein the management control unit is further configured to store a preset optical fiber connection relation between units in the node device, and judge whether the obtained optical fiber connection relation between the first unit and the second unit in the node device is correct.

14. The node device according to claim 12 or 13, wherein the first port identification information and the second port identification information are the same, or the first port identification information and the second port identification information are different;
the first unit and the second unit are further configured to pre-save, in a case that the first port identification information and the second port identification information are different, the first port identification information and the second port identification information, wherein the first port identification information and the second port identification information are used to identify correlation information of the same optical fiber, thereby obtaining third correlation information; and
the management control unit is further configured to acquire the third correlation information, and determine the optical fiber connection relation between the first unit and the second unit based on the first correlation information and the second correlation information, and in combination with the third correlation information.
